# EUROPEAN PATENT APPLICATION

(11) **EP 4 344 548 A1**
(43) Date of publication of application: **03.04.2024**
(21) Application number: 22382886.4
(22) Date of filing: 27.09.2022
(51) Int. Cl.: A21C 5/04, G01F 11/10

(54) **AUTOMATIC MEASURING AND WEIGHING MACHINE FOR BREAD DOUGH**

(71) Applicant: López López, Miguel, 37188 Carbajosa de la Sagrada (ES); López López, Susana, 37188 Carbajosa de la Sagrada (ES); Gómez Gómez, María José, 37188 Carbajosa de la Sagrada (ES); Arribas Aleixios, Vicente Andrés, 37188 Carbajosa de la Sagrada (ES)
(72) Inventor: López López, Miguel, 37188 Carbajosa de la Sagrada (ES); López López, Susana, 37188 Carbajosa de la Sagrada (ES); Gómez Gómez, María José, 37188 Carbajosa de la Sagrada (ES); Arribas Aleixios, Vicente Andrés, 37188 Carbajosa de la Sagrada (ES)
(74) Representative: García Limorti, Elena

(57) **Abstract**

The purpose of this invention is to serve as an automatic measuring and weighing machine for bread dough, consisting of a rotating drum which is filled with this substance and then deposited on a conveyor belt in a cyclical manner, always separating the same amount of dough, by means of a geared motor which transmits its movement to a transmission system connected to a piston inside the rotating drum.

## Description

### PURPOSE OF THE INVENTION

The purpose of this invention, as its name suggests, is to serve as an automatic measuring and weighing machine for bread dough, consisting of a rotating drum which is filled with this substance and which is then deposited on a conveyor belt in a cyclical manner, always separating the same amount of dough, by means of a geared motor which transmits its movement to a transmission system connected to a piston inside the rotating drum. This is an innovation that, among the current techniques, provides advantages unknown until now.

### TECHNOLOGY SECTOR

This invention belongs to the food industry sector, more specifically to the bakery industry.

This invention is an automatic measuring and weighing machine for bread dough, which cyclically separates the same quantity of bread dough.

### BACKGROUND OF THE INVENTION

As a reference to the current state of the art, it should be pointed out that, although a great variety and many models of bread dough separating machines are known, at least by the applicant, the existence of any machine with structural and constitutive technical characteristics equal or similar to those of the one claimed herein is not known.

### EXPLANATION OF THE INVENTION

Therefore, the purpose of this invention is to serve as an automatic measuring and weighing machine for bread dough, comprising a rotating drum which has at least one hole with an inlet and an outlet for the bread dough contained inside it, as well as a hole for a piston guided inside the rotating drum, also comprising a dough inlet nozzle in front of the mouth of the rotating drum in the first position of the rotating drum, and a conveyor belt which receives the dough expelled from the mouth of the rotating drum by means of a piston.

The machine also includes a geared motor connected to the transmission mechanism that generates the rotational movement of a crank connected at one end to a connecting rod. The connecting rod at the other end is connected to a shaft where it is attached to the plunger inside the rotating drum. Said shaft is comprised of a wheel sliding on a cam and is contiguous by means of guides that guide it backwards.

### BRIEF DESCRIPTION OF THE DRAWINGS

In order to complete the description being made and with the purpose of helping to better understand the characteristics of the invention, this description is accompanied by figures of an illustrative and non-limiting character which are an integral part of it and in which the following has been represented:

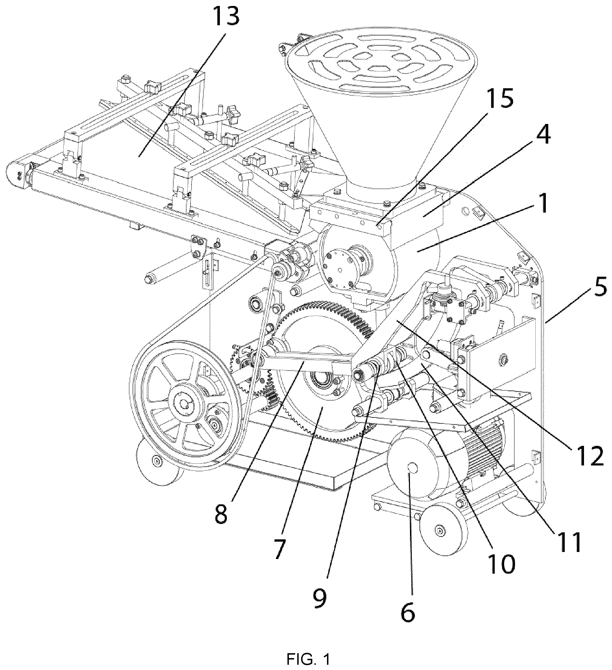

Figure 1 is a perspective drawing of the automatic measuring and weighing machine for bread dough.

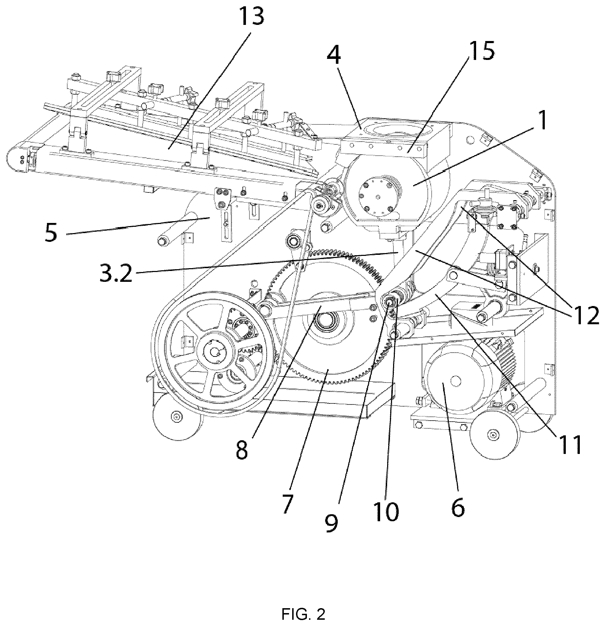

Figure 2 is a perspective drawing of the automatic measuring and weighing machine for bread dough.

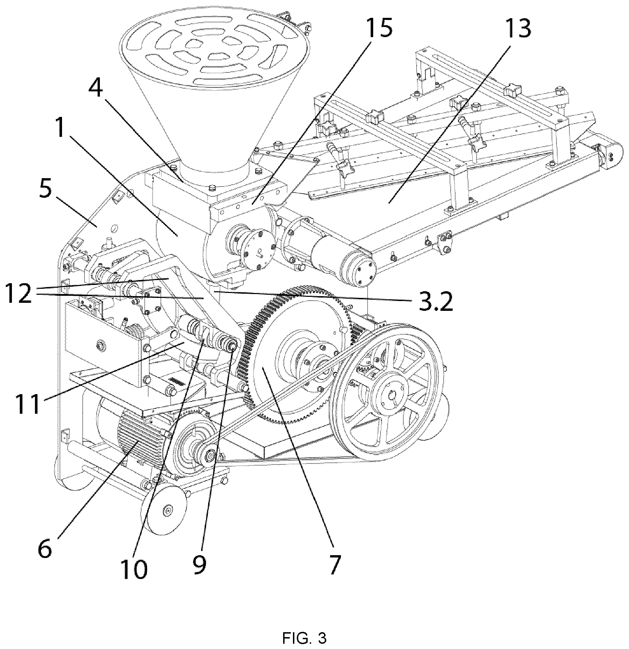

Figure 3 is a perspective drawing of the automatic measuring and weighing machine for bread dough.

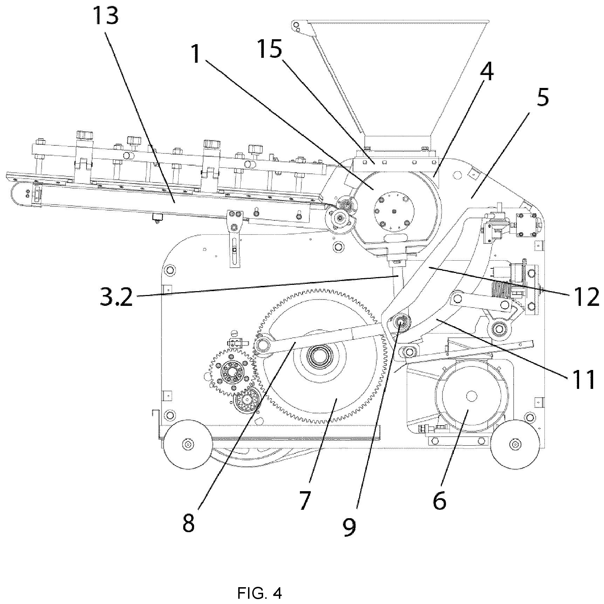

Figure 4 is a side view of the automatic measuring and weighing machine for bread dough.

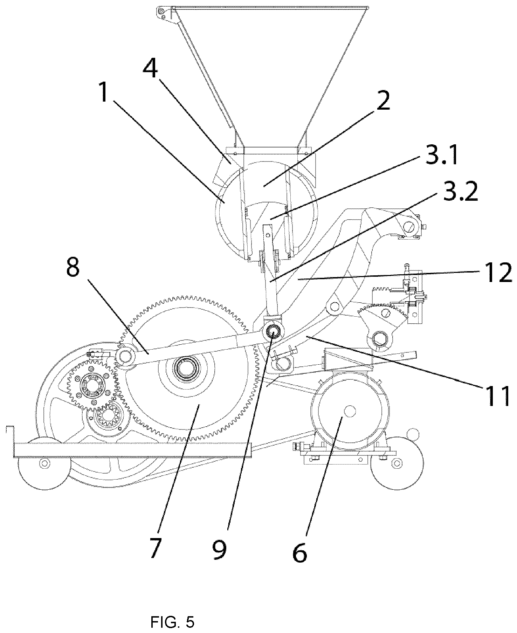

Figure 5 is a cutaway drawing of the automatic bread dough measuring and weighing machine.

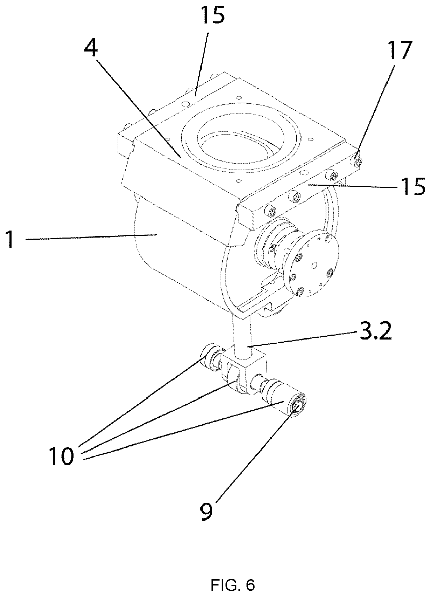

Figure 6 is a perspective drawing of the automatic measuring and weighing machine for bread dough, showing in detail the parts of the rotating drum (1) and the inlet nozzle (4).

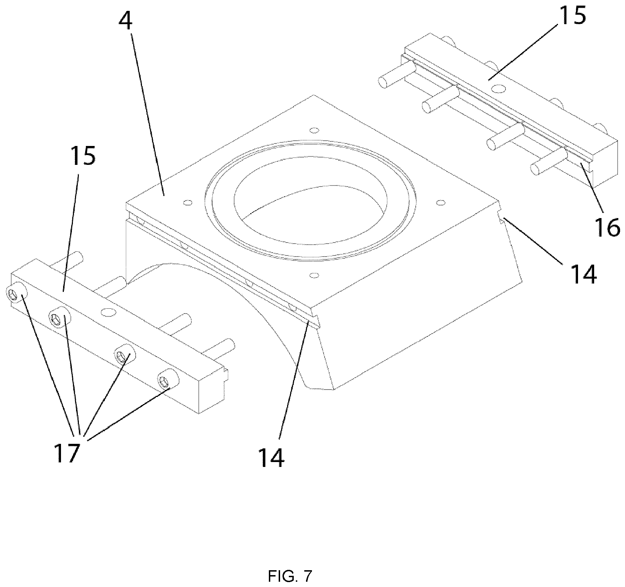

Figure 7 is a perspective drawing of the automatic measuring and weighing machine for bread dough, showing in detail the parts of the inlet nozzle (4).

### PREFERRED EMBODIMENT OF THE INVENTION

In view of the figures, a preferred, but not limiting, embodiment of the proposed invention, which consists of an automatic measuring and weighing machine for bread dough, is described below. As shown in the figures, the automatic measuring and weighing machine for bread dough comprises a rotating drum (1) with an inner hole (2), and a piston (3.1), configured for introducing and discharging the substance contained in the inner hole (2), an inlet nozzle (4), configured for adding the substance into the rotating drum (1), a structure (5) supporting the rest of the elements of this invention, as well as a motor-reducer (6) connected to a transmission mechanism ending in a crank (7), which is connected to a transmission connecting rod (8) , and at its opposite end is connected to a shaft (9), which has followers (10) that are configured to slide along a cam (11), which constrains its movement, and guides (12) that guide its return. As the crank (7) performs a rotational movement, it pulls and pushes the transmission connecting rod (8) which is guided by the cam (11) and the guides (12), and said transmission connecting rod (8) is connected to the connecting rod (3.2) of the piston (3.1) which in turn on the other side is located inside the inner bore (2) of the rotating drum (1), which allows the piston to slide diametrically cyclically and in this movement makes the rotating drum (1) rotate radially, allowing the substance to be introduced through the inlet nozzle (4), filling the inner cavity of the inner bore (2) when the piston (3.1) is withdrawn, and when introduced again, pushes the substance to a conveyor belt (13), in a cyclic manner.

The inlet nozzle (4), is made of a plastic material and has at least one groove (14) configured, to guide the position the inlet nozzle (4) by means of at least one guide (15) fixed to the structure (5) which has a rib (16) that is complementary to the groove (14). The inlet nozzle (4) is fixed to the guides (15) by means of fasteners (17).

## Claims

1. Automatic measuring and weighing machine for bread dough, comprising:
a. a rotating drum (1) with an inner hole (2), and
b. a piston (3.1), configured for introducing and discharging the substance contained in the inner hole (2), an inlet nozzle (4), configured for introducing the substance into the rotating drum (1),
c. a structure (5) supporting the rest of the elements of this invention
d. conveyor belt (13),
It comprises a geared motor (6) connected to a transmission mechanism that transmits its movement to a crank (7), which is connected to a transmission connecting rod (8), and at the opposite end of which is attached to a shaft (9), which has followers (10) that are configured to slide along a cam (11), which limits its movement, and guides (12) which guide its return, which, as the crank (7) performs a rotational movement, pulls and pushes the transmission connecting rod (8) which is guided by the cam (11) and the guides (12), and said transmission connecting rod (8) is connected to the connecting rod (3.2) of the piston (3.1) which in turn on the other side is located inside the inner hole (2), of the rotating drum (1), which allows the piston to slide diametrically, cyclically and in that movement makes the rotating drum (1) rotate radially, allowing the substance when introduced through the inlet nozzle (4), to fill the inner cavity of the inner bore (2) when the piston (3.1) is withdrawn, and when introduced again pushes the substance to a conveyor belt (13), in a cyclic manner.

2. Automatic measuring and weighing machine for bread dough according to claim 1, with an inlet nozzle (4), made of a plastic material and with at least one groove (14) configured to guide the position of the inlet nozzle (4) by means of at least one guide (15) fixed to the structure (5) which has a rib (16) that is complementary to the groove (14). The inlet nozzle (4) is fixed to the guides (15) by means of fasteners (17).
